(19) Europäisches Patentamt
European Patent Office
Office européen des brevets

(11) Numéro de publication: **0 112 195**
**B1**

# (12) FASCICULE DE BREVET EUROPEEN

(45) Date de publication du fascicule du brevet: **05.08.87**

(51) Int. Cl.[4]: **C 10 L 1/22**, C 08 F 8/32, C 08 F 222/40

(21) Numéro de dépôt: **83402111.5**

(22) Date de dépôt: **28.10.83**

## (54) Copolymères à fonctions azotées utilisables notamment comme additifs d'abaissement du point de trouble des distillats moyens d'hydrocarbures et compositions de distillats moyens d'hydrocarbures renfermant lesdits copolymères.

(30) Priorité: **09.11.82 FR 8218968**

(43) Date de publication de la demande: **27.06.84 Bulletin 84/26**

(45) Mention de la délivrance du brevet: **05.08.87 Bulletin 87/32**

(84) Etats contractants désignés: **BE CH DE GB IT LI NL SE**

(56) Documents cités:
**FR - A - 1 459 497**
**FR - A - 2 022 172**
**FR - A - 2 065 425**
**GB - A - 2 065 676**

(73) Titulaire: **INSTITUT FRANCAIS DU PETROLE, 4, Avenue de Bois-Préau, F-92502 Rueil-Malmaison (FR)**
Titulaire: **ELF FRANCE, 137, Rue de l'Université, F-75007 Paris (FR)**

(72) Inventeur: **Denis, Jacques, Les Chênes 18, Chemin Grandes Bruyères, F-69260 Charbonnière-les-Bains (FR)**
Inventeur: **Sillion, Bernard, 13, rue des Erables, F-78150 Rocquencourt (FR)**
Inventeur: **Damin, Bernard, 162, Grande-Rue, F-69600 Oullins (FR)**
Inventeur: **Leger, Robert, Rue Pierre Semard 5, Résidence Cazardes, F-69520 Grigny (FR)**

(74) Mandataire: **Colas des Francs, Jean et al, Institut Français du Pétrole 4, Avenue de Bois Préau, F-92502 Rueil-Malmaison (FR)**

**EP 0 112 195 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne de nouveaux additifs azotés utilisables comme agents d'abaissement du point de trouble des distillats moyens d'hydrocarbures (fuel -oils, gazoles), ainsi que les compositions de distillats moyens renfermant les dits additifs.

Les distillats de pétrole concernés par l'invention consistent en des distillats moyens (fuel -oils, gazoles) dont l'intervalle de distillation (norme ASTM D 86-67) se situe entre 150°C et 450°C. Les gazoles considérés plus particulièrement ont un intervalle de distillation allant d'une température initiale comprise entre 160°C et 190°C à une température finale comprise entre 350°C et 390°C, ces limites n'étant pas impératives.

Il existe sur le marché un grand nombre de produits préconisés pour améliorer la température limite de filtrabilité et le point d'écoulement des coupes pétrolières riches en paraffines, tels que par exemple:

- les polymères à base d'oléfines à longue chaîne,
- les copolymères à base d'alpha-oléfines,
- les copolymères éthylène-acétate de vinyle,
- les N-acylaminoéthylesters de polymères contenant des acides, ou encore:
- des composés halocarbonés.

Ces produits agissent sur les phénomènes cinétiques de cristallisation et modifient la taille des cristaux, permettant l'emploi de la suspension à une température plus basse sans colmatage des canalisations et des filtres. Les produits mentionnés ci-dessus ne modifient pas la température à laquelle apparaissent les premiers cristaux de paraffine. En effet, il a été considéré jusqu'à présent que cette température était une donnée dépendant du poids moléculaire et de la formule des paraffines et de la nature du solvant.

L'abaissement du point de trouble des distillats moyens (notamment des gazoles) par un additif, présenterait un intérêt important pour les raffineurs, car il permettrait, sans modifier le schéma de distillation, de respecter les spécifications, qui évoluent actuellement dans le sens d'une plus grande sévérité.

Dans l'art antérieur, le document FR-A 2 022 172 décrit un procédé pour améliorer les caractéristiques d'écoulement des fuels résiduaires, qui comprend l'addition au pétrole brut avant distillation, d'une faible proportion, par exemple de 0,003 à 2,0% en poids d'un polymère ou copolymère thermiquement stable de masse moléculaire moyenne de 750 à 275 000, comprenant au moins 20% en moles d'un monomère éthyléniquement insaturé portant une chaîne alkyle latérale linéaire de 18 à 38 atomes de carbone. Plus particulièrement, le monomère à longue chaîne alkyle peut être un ester, amide ou imide formé entre un acide monocarboxylique ou dicarboxylique insaturé et un alcool ou une amine à longue chaîne ($C_{18}$ à $C_{38}$); ce peut être aussi une oléfine-α de $C_{20}$ à $C_{40}$.

Le document FR-A 1 459 497 décrit des additifs dispersants pour fuel oils et gas oils consistant en des copolymères alternés de masse moléculaire de 2 000 à 15 000, formés d'un maléimide de N-substitué par un radical aminohydrocarbyle de 5 à 26 atomes de carbone et d'une oléfine-α de 8 à 30 atomes de carbone.

Le document FR-A 2 065 425 décrit l'utilisation dans un combustible de distillation «flash», dans une huile brute ou dans une huile de schiste, d'une proportion mineure, par exemple de 0,0001% à 10% en poids du produit de la réaction d'un alcool ou d'une amine d'au moins 16 atomes de carbone avec un copolymère formé entre un composé dicarboxylique (diacide, anhydride) et une oléfine-α d'au moins 20 atomes de carbone.

Le document GB-A 2 065 676 décrit des terpolymères de masse moléculaire moyenne de 500 à 200 000 formés de 10 à 94% d'unités dérivant d'ester acrylique ou methacrylique, de 3 à 65% d'unités dérivant de composé dicarboxylique (anhydride, diacide, amide, ester ou imide N-substitué) et de 3 à 40% d'unités dérivant de diisobutylène. Les unités dicarboxyliques peuvent avoir été modifiées plus particulièrement par condensation de composés tels que la diméthylaminopropylamine, la triéthylènetétramine, la tétraéthylènepentamine, l'amino-2 pyridine, la N,N-diéthyléthanolamine, la diéthanolamine, la cyano-1 guanidine, le triméthylolpropane, le glycérol et le pentaérythritol. Ces terpolymères, additionnés à diverses huiles hydrocarbonées, par exemple à raison de 0,005 à 2% en poids, en améliorent le point d'écoulement.

On a maintenant découvert que certains composés chimiques, dont une définition est donnée plus loin, ont, lorsqu'ils sont ajoutés aux distillats moyens, la propriété de ne laisser apparaître les premiers cristaux de paraffines qu'à une température plus basse que celle à laquelle ces cristaux apparaîtraient en l'absence de tels additifs. Cette propriété et d'autant plus inattendue qu'elle se conserve après plusieurs cycles de réchauffage et de refroidissement et se manifeste par un mécanisme qui n'est pas encore expliqué.

Cette classe de composés chimiques présente également un effet sur d'autres propriétés des distillats moyens (notamment des gazoles), en modifiant le comportement du milieu qui contient les paraffines précipitées.

Ainsi, les composés préconisés dans l'invention ont une action importante sur la température limite de filtrabilité et la température d'écoulement.

Lorsque les cristaux de paraffines, dont la formation est provoquée par le refroidissement, sont apparus, leur tendance naturelle est de se rassembler par gravité dans la partie basse. Ce phénomène, généralement connu sous le terme de sédimentation, provoque le bouchage des canalisations et des filtres et est préjudiciable à la bonne utilisation des distillats moyens et notamment des gazoles. Les composés chimiques pré-

conisés dans l'invention peuvent diminuer notablement la vitesse de sédimentation des paraffines formées par refroidissement des gazoles et autres distillats moyens.

Enfin, les produits préconisés pour leurs propriétés mentionnées ci-dessus confèrent en outre aux gazoles et distillats moyens auxquels ils sont ajoutés, des propriétés anti-corrosion sur les surfaces métalliques.

D'une manière générale, les additifs de l'invention peuvent être définis comme des produits polymériques de masse moléculaire moyenne en nombre d'environ 1 000 à 10 000, résultant de la condensation d'un ou plusieurs composés à fonction amine primaire défini plus loin sur un copolymère comprenant:

(A) des motifs provenant d'au moins une oléfine-α linéaire.
(B) des motifs dérivant d'au moins un composé α, β - dicarboxylique insaturé, sous forme de diacide, diester d'alkyle léger ou d'anhydride;
(C) des motifs provenant d'au moins un ester d'alkyle d'acide monocarboxylique insaturé, et
(D) des motifs provenant du styrène et/ou d'au moins un de ses dérivés alkylés, halogénés ou méthoxylés.

Plus particulièrement, les copolymères considérés comprennent une proportion de 20 à 40% en moles de motifs dérivant d'oléfines-α, de 30 à 70% en moles de motifs dérivant de composés α-β dicarboxyliques insaturés, de 5 à 30% en moles de motifs dérivant d'esters alkyliques d'acides monocarboxyliques insaturés et de 5 à 15% en moles de motifs dérivant du styrène ou de ses dérivés. Les oléfines-α linéaires entrant dans la composition des polymères renferment de préférence au moins 16 atomes de carbone. On utilise avantageusement des mélanges d'oléfines-α linéaires de 20 à 24 atomes de carbone, de 24 à 38 atomes de carbone ou encore des coupes renfermant environ 20% en poids d'oléfines-α d'au plus 28 atomes de carbone et environ 80% en poids d'oléfines-α de 30 atomes de carbone ou plus. Le plus souvent, l'oléfines-α linéaire renferme de 16 à 30 atomes de carbone.

Les composés α,β-dicarboxyliques insaturés entrant dans la composition du copolymère sont plus particulièrement des acides dicarboxyliques tels que l'acide maléïque, ou des acides alkylmaléïques, par exemple l'acide méthylmaléïque (ou citraconique).

Ces composés peuvent aussi consister en des diesters d'alkyle de ces acides dicarboxyliques en particulier les diesters méthyliques, éthyliques ou propyliques, ou encore en les anhydrides correspondants à ces acides dicarboxyliques. Dans le cadre de l'invention, les anhydrides seront préférés, et, plus particulièrement, l'anhydride maléïque.

Les esters d'alkyle d'acides monocarboxyliques insaturés sont plus particulièrement les acrylates et les méthacrylates d'alkyle de 4 à 30 atomes de carbone, par exemple les acrylates de butyle, d'éthylhexyle, de décyle, de dodécyle, d'hexadécyle, d'octadécyle et d'éicosyle. On peut encore citer les acrylates et les méthacrylates de coupes industrielles d'alcools renfermant en moyenne 12 atomes de carbone (acrylate et méthacrylate de lauryle) ou 18 atomes de carbone (acrylate et méthacrylate de stéaryle), ainsi que les coupes d'alcools plus lourds, riches en alcools ayant 20 ou 22 atomes de carbone.

Les dérivés du styrène pouvant entrer dans la composition des polymères sont plus particulièrement l'o-méthylstyrène, le p-méthylstyrène, le diméthyl-2,5 styrène, l'o-méthoxystyrène, le p-méthoxystyrène, le diméthoxy-2,5 styrène, le p-bromostyrène, le p-chlorostyrène, le dichloro-2,5 styrène. Dans le cadre de l'invention, le styrène est le composé préférentiellement utilisé. Le composé à fonction amine primaire que l'on condense avec les copolymères décrits ci-dessus pour former les additifs de l'invention peut répondre à l'une des deux formules générales suivantes (I) et (II):

$$R\text{-}Z\text{-}[(CH_2)_n\text{-}NH]_m\text{-}H \quad (I)$$

$$HO\text{-}CH_2\text{-}R''\text{-}NH_2 \quad (II)$$

Dans la formule (I), R représente un radical aliphatique saturé monovalent, comprenant de 1 à 30 atomes de carbone.

Z peut, suivant les cas, être un atome d'oxygène ou représenter un groupement divalent -NH- ou -NR'-, R' étant un radical aliphatique monovalent, de préférence linéaire, comprenant de 1 à 30 atomes de carbone et préférentiellement de 12 à 24 atomes de carbone, n est un nombre entier de 2 à 4, et m peut avoir la valeur zéro, lorsque Z est NH, ou être un nombre entier de 1 à 4, dans tous les cas.

Les composés de formule (I) ci-dessus peuvent consister en des amines primaires de formule $R\text{-}NH_2$ (dans ce cas, dans la formule (I), Z représente le groupement -NH-, et la valeur de m est zéro). De préférence, le radical R est linéaire et renferme de 12 à 24 atomes de carbone. Comme exemple spécifiques de ces amines, on peut citer:

la dodécylamine, le tétradécylamine, l'hexadécylamine, l'octadécylamine, l'éicosylamine et la docosylamine.

Les composés de formule (I) peuvent encore consister en des polyamines dérivées d'amines aliphatiques saturées répondant à la formule:

$$R\text{-}NH\text{-}[(CH_2)_n\text{-}NH]_m\text{-}H$$

qui correspond à la formule générale (I) dans laquelle Z représente le groupement -NH-; m peut avoir une valeur de 1 à 4 et n une valeur de 2 à 4, de préférence 3.

De préférence, le radical R est linéaire et renferme de 12 à 24 atomes de carbone. Comme composés spécifiques, on peut citer: le N-dodécyl diamino-1,3 propane, le N-tétradécyl diamino-1,3 propane, le N-hexadécyl diamino-1,3 propane, le N-octadécyl diamino-1,3 propane, le N-éicosyl diamino-1,3 propane, le N-docosyl diamino-1,3 propane, la N-hexadécyldipropylène triamine, la N-octadécyl dipropylène triamine, la N-éicosyldipropylène triamine et la N-docosyldipropylène triamine.

Les composés de formule (I) peuvent également consister en des polyamines répondant à la formule:

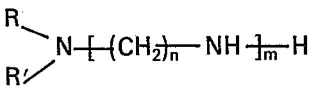

correspondant à la formule générale (I) où Z représente –N R′- et où R et R′, identiques ou différents, sont chacun un radical alkyle ayant de 1 à 24 et de préférence de 8 à 22 atomes de carbone, R et R′, renfermant à eux deux de préférence de 16 à 32 atomes de carbone; n a une valeur de 2 à 4 et m une valeur de 1 à 4.

Comme composés spécifiques, on peut citer le N,N-diéthyl-diamino-1,2 éthane, le N,N-diisopropyldiamino-1,2 éthane, le N,N-dibutyl-diamino-1,2 éthane, le N,N-diéthyl-diamino-1,4 butane, le N,N-diméthyl-diamino-1,3 propane, le N,N-diéthyl-diamino-1,3 propane, le N,N-dioctyl-diamino-1,3 propane, le N,N-didécyldiamino-1,3 propane, le N,N-didodécyl-diamino-1,3 propane, le N,N-ditétradécyl-diamino-1,3 propane, le N,N-dihexadécyldiamino-1,3 propane, le N,N-dioctadécyldiamino-1,3 propane, la N,N-didodécyldipropylènetriamine, la N,N-ditétradécyldipropylène triamine, la N,N-dihexadécyldipropylène triamine et la N,N-dioctadécyldipropylènetriamine.

Enfin les composés de formule (I) considérés dans l'invention peuvent consister en des éther-amines répondant plus particulièrement à la formule:

$$R\text{-}O\{-(CH_2)_n-NH\}_m H$$

qui correspond à la formule générale (I) dans laquelle Z est un atome d'oxygène; de préférence, le radical R renferme de 12 à 24 atomes de carbone, m est un nombre entier de 1 à 4 et n est un nombre entier de 2 à 4, préférentiellement 2 ou 3. Parmi les éther-amines, on peut citer comme composés spécifiques: la méthoxy-2 éthylamine, la méthoxy-3 propylamine, la méthoxy-4 butylamine, l'éthoxy-3 propylamine, l'octyloxy-3 propylamine, la décyloxy-3 propylamine, l'hexadécyloxy-3 propylamine, l'éicosyloxy-3 propylamine, la docosyloxy-3 propylamine, le N-(octyloxy-3 propyl) diamino-1,3 propane, le N-(décyloxy-3 propyl) diamino-1,3 propane, la (triméthyl-2,4,6 décyl) oxy-3 propylamine et le N-[(triméthyl-2,4,6 décyl) oxy-3 propyl] diamino-1,3 propane.

Le composé à fonction amine primaire mis en jeu dans la préparation des additifs de l'invention peut aussi consister en un aminoalcool de formule (II):

$$HO\text{-}CH_2\text{-}R''\text{-}NH_2 \qquad (II)$$

où R″ représente un radical aliphatique saturé divalent, linéaire ou ramifié, de préférence linéaire, renfermant de 1 à 18 atomes de carbone.

Comme exemples spécifiques, on peut citer:

la monoéthanolamine, l'amino-1 propanol-3, l'amino-1 butanol-4, l'amino-1 pentanol-5, l'amino-1 hexanol-6, l'amino-1 heptanol-7, l'amino-1 octanol-8, l'amino-1 décanol-10, l'amino-1 undécanol-11, l'amino-1 tridécanol-13, l'amino-1 tétradécanol-14, l'amino-1 hexadécanol-16, l'amino-2 méthyl-2 propanol-1, l'amino-2 butanol-1 et l'amino-2 pentanol-1.

Il doit être entendu que, sans sortir du cadre de l'invention, il est possible de mettre en jeu un ou plusieurs composés répondant à la formule (I) et/ou un ou plusieurs composés répondant à la formule (II).

La préparation des additifs de l'invention est en général effectuée en deux étapes: on prépare tout d'abord les copolymères, puis on effectue sur ceux-ci la condensation du composé de formule (I) et/ou (II).

Les copolymères peuvent être préparés, dans la première étape, selon les méthodes classiques de polymérisation par voie radicalaire, par exemple en présence d'un amorceur de type azobisisobutyronitrile ou peroxyde, en solution dans un solvant hydrocarboné, tel que par exemple le cyclohexane, l'isooctane, le dodécane, le benzène, le toluène, le xylène, ou le diisopropylbenzène ou encore le tétrahydrofuranne ou le dioxanne.

On utilisera avantageusement des coupes hydrocarbonées à point d'ébullition relativement élevé, telles qu'un kérosène ou un gazole.

La quantité de solvant utilisée sera en général telle que la concentration pondérale en matière sèche se situe entre 25 et 70% et de préférence au voisinage de 60%.

La réaction de copolymérisation, en présence de l'amorceur radicalaire est effectuée à une température de 70 à 200°C et de préférence de 80 à 130°C. Selon les conditions opératoires, la durée de la réaction peut aller de 2 à 14 heures. On obtient une solution de copolymères sous la forme d'un liquide visqueux de couleur jaune clair.

On effectue ensuite, dans une deuxième étape, la condensation du composé de formule (I) ou (II) sur le copolymère formé dans la première étape, selon toute méthode usuelle.

A la solution de copolymère obtenue comme décrit précédemment, on ajoute en général le composé de formule (I) ou (II) en une proportion molaire correspondant sensiblement à la proportion de diacide, de diester, ou d'anhydride insaturé mis en jeu dans la préparation du copolymère. Cette proportion peut être par exemple de 0,9 à 1,1 mole de composé (I) ou (II) par mole de composé dicarboxylique.

On peut aussi prévoir un défaut plus important de composé de formule (I). On peut alors utiliser une proportion aussi faible que, par exemple, 0.5 mole par mole de composé dicarboxylique mis en jeu dans le copolymère.

La réaction est réalisée par chauffage du mélange à une température comprise entre 75 et 130°C, de préférence entre 80 et 100°C, la durée de la réaction étant comprise entre environ 1 et 6 heures, une durée de l'ordre de 2 heures étant généralement suffisante. La réaction des produits de formule (I) ou (II) sur les motifs (B) du copolymère donne naissance à des groupements imides (succinimides), cette réaction étant accompagnée de la formation d'eau ou d'alcool selon la nature des motifs dicarboxyliques (B) (diacide, anhydride ou diester). On peut, si on le désire, évacuer les produits volatils formés hors du mélange réactionnel, soit par entraînement avec un gaz inerte comme par exemple l'azote, soit par distillation azéotropique avec le solvant choisi.

Un autre mode particulier de synthèse des additifs considérés dans l'invention peut consister, dans certains cas, à réaliser la copolymérisation radicalaire d'un ou plusieurs esters d'alkyle d'acides monocarboxyliques insaturés avec un mélange d'oléfines-α, de styrène et de maleïmides N-substitués, ces derniers étant obtenus par réaction préalable des composés de formule (I) ou (II) sur l'anhydride maléïque ou un de ses dérivés précités.

Les additifs sont obtenus en solution dans le solvant choisi et peuvent être utilisés sous cette forme directement dans les distillats moyens de pétrole (notamment dans les gazoles) dont on souhaite améliorer le point de trouble.

Bien que le mécanisme d'action de ces additifs sur la température d'apparition des cristaux de paraffines dans les distillats moyens n'ait pas encore été clairement élucidé, on observe une nette amélioration du point de trouble des distillats moyens traités par ces additifs, lorsqu'ils sont ajoutés à des concentrations allant par exemple de 0,001 à 1% en poids et de préférence de 0,01 à 0,2%. L'abaissement du point de trouble peut atteindre par exemple 5°C, ou plus.

Il est remarquable de constater que les additifs considérés dans l'invention, qui sont efficaces sur l'amélioration du point de trouble des distillats moyens, ont d'autre part la propriété d'inhiber la sédimentation des n-paraffines dans les distillats moyens au repos, d'améliorer la température limite de filtrabilité et la température d'écoulement, et d'inhiber la corrosion des surfaces métalliques en contact avec ces distillats.

Les exemples suivants illustrent l'invention, sans la limiter.

Exemple 1

a) On introduit dans un réacteur muni d'un système d'agitation, d'un réfrigérant et d'une arrivée de gaz inerte 98 g (1 mole) d'anhydride maléïque, 243 g (0,67 équivalent molaire) d'une coupe d'oléfines-α composée en moles, d'environ 1% d'oléfines en $C_{22}$, de 30% d'oléfines en $C_{24}$, de 39% d'oléfines en $C_{26}$, 20% d'oléfines en $C_{28}$ et 10% d'oléfines en $C_{30}$, 97,5 g (0,53 mole) d'acrylate d'éthyl-hexyle, et 13,5 g (0,13 mole) de styrène, et l'on ajoute 250 ml d'un solvant constitué d'une coupe pétrolière distillant entre 120 et 250°C. On porte à 120°C en agitant, puis on introduit en continu pendant 8 heures à l'aide d'une pompe-seringue 3,4 g de peroxyde de benzoyle dilué par une faible quantité de solvant. On obtient alors un copolymère en solution sous forme d'un liquide jaune clair.

b) Dans le même réacteur, on ajoute à cette solution 210 g (correspondant à 0,75 équivalent molaire d'amine primaire) d'une coupe d'amines grasses primaires dont les chaînes alkyles comportent en moyenne 1% de $C_{14}$, 28% de $C_{16}$, et 71% de $C_{18}$ en moles; on ajoute alors 200 ml du solvant décrit en a) pour obtenir une teneur en matière sèche de l'ordre de 60% en poids.

Après 2 heures de chauffage à 90°C, on obtient une solution jaune clair, dont le spectre infra-rouge montre la présence de bandes imides. Cette solution ajustée par le même solvant à une teneur de 50% en poids de matière sèche, constitue la «solution mère» de l'additif I.

Exemples 2 à 7

On répète plusieurs fois la préparation du copolymère suivant l'exemple 1.a) et l'on procède sur chacun des copolymères obtenus à la condensation de composés présentant des fonctions amines primaires, en suivant le mode opératoire décrit en 1.b) et en respectant les proportions molaires de l'exemple 1.

Exemple 2

Sur le copolymère suivant 1.a), on condense 225 g d'une coupe d'amines grasses primaires dont les chaînes alkyles comprennent en moles environ: 1% de $C_{14}$, 5% de $C_{16}$, 42% de $C_{18}$, 12% de $C_{20}$ et 40% de $C_{22}$.

On obtient ainsi une solution de l'additif II.

Exemple 3

Pour la condensation sur le copolymère préparé suivant 1.a), on utilise 277,5 g d'une coupe de N-alkyl-diamino-1,3 propane composée d'amines dont les chaînes alkyles sont constituées en moyenne de 1% de $C_{14}$, 28% de $C_{16}$ et 71% de $C_{18}$, en moles. Le résultat de cette opération fournit l'additif III.

Exemple 4

On utilise comme agent de condensation sur le copolymère 1.a) 288 g d'une coupe de N-alkyl-diamino-1,3 propane dont les chaînes alkyles sont constituées d'environ 1% de $C_{14}$, 5% de $C_{16}$, 42% de $C_{18}$, 12% de $C_{20}$ et 40% de $C_{22}$, en moles. Cette opération fournit l'additif IV.

Exemple 5

On condense sur le copolymère obtenu suivant 1.a), 129,75 g (0,75 mole) d'amino-1 décanol-10. Le résultat de cette condensation constitue l'additif V.

Exemple 6

La coupe d'amines grasses utilisée dans l'exemple 1.b) est remplacée par la même quantité molaire (224,25 g) de N-[(triméthyl-2,4,6 décyl)

oxy-3 propyl] diamino-1,3 propane. Le produit constitue l'additif VI.

Exemple 7

La coupe d'amines grasses utilisée dans l'exemple 1.b) est remplacée par la même quantité molaire (304 g) de N,N-didodecyldiamino-1,3 propane. Le produit de condensation que l'on obtient constitue l'additif VII.

Exemple 8

On prépare suivant les conditions expérimentales décrites en 1.a), un copolymère qui diffère de celui préparé en 1.a) par la nature de la coupe d'oléfines-α utilisée. Celle-ci est composée d'environ 1% d'oléfine en $C_{18}$, 49% d'oléfine en $C_{20}$, 42% d'oléfine en $C_{22}$ et 8% d'oléfine en $C_{24}$; on en utilise 198,4 g (0,67 équivalent molaire). Après condensation de la coupe d'amine décrite en 1.b), on obtient l'additif VIII.

Exemples 9 à 13

En utilisant les conditions expérimentales décrites en 1.a), on prépare des copolymères différents de celui préparé en 1.a) par la nature et, le cas échéant, par la proportion molaire du monomère acrylique utilisé et éventuellement de la coupe d'oléfines-α.

On condense sur ces nouveaux copolymères la même coupe d'amines que celle utilisée en 1.b) en suivant le même mode opératoire et en gardant les mêmes rapports molaires.

Exemple 9

Pour préparer le copolymère on utilise 98 g (1 mole) d'anhydride maléïque, 243 g (0,67 équivalent molaire) de la coupe d'oléfines utilisée dans l'exemple 1; 13,65 g (0,13 mole) de styrène, 135,4 g (0,53 équivalent molaire) d'une coupe de méthacrylates d'alcools de composition pondérale approximative: 13% en $C_8$, 15% en $C_{10}$, 28% en $C_{12}$, 20% en $C_{14}$, 14% en $C_{16}$ et 7% en $C_{18}$. La condensation d'amines suivant 1.b) fournit l'additif IX.

Exemple 10

Le copolymère est préparé à partir des mêmes monomères que dans l'exemple 9 mais les proportions diffèrent: 98 g (1 mole) d'anhydride maléïque, 243 g (0,67 d'équivalent molaire) d'oléfines, 16,8 g (0,16 mole) de styrène et 40,8 g (0,16 équivalent molaire) de méthacrylates. La condensation d'amines suivant 1.b) fournit l'additif X.

Exemple 11

Le copolymère est préparé à partir de 98 g (1 mole) d'anhydride maléïque, 296,1 g (1 équivalent molaire) de la coupe d'oléfines utilisée dans l'exemple 8, 26,25 g (0,25 mole) de styrène et 191,25 g (0,75 équivalent molaire) de la coupe de méthacrylates utilisée dans l'exemple 9.

La condensation d'amines suivant 1.b) fournit l'additif XI.

Exemple 12

Le copolymère est préparé à partir de 98 g (1 mole) d'anhydride maléïque, 296,1 g (1 équivalent molaire) de la coupe d'oléfines utilisée dans l'exemple 8, 26,25 g (0,25 mole) de styrène et 244 g (0,75 équivalent molaire) d'une coupe de méthacrylates d'alcools de composition pondérale approximative: 2% en $C_{14}$, 51% en $C_{16}$, 30% en $C_{18}$, 14% en $C_{20}$ et 3% en $C_{22}$.

La condensation d'amines suivant 1.b) fournit l'additif XII.

Exemple 13

Le copolymère est préparé à partir de 98 g (1 mole) d'anhydride maléïque, 296,1 g (1 équivalent molaire) de la coupe d'oléfines utilisée dans l'exemple 8, 16,8 g (0,16 mole) de styrène en 96 g (0,75 mole) d'acrylate de butyle.

La condensation d'amines suivant 1.b) fournit l'additif XIII.

Les additifs décrits ci-dessus sont obtenus en solution dans une coupe pétrolière distillant entre 120 et 250°C. Leur concentration dans cette solutions est généralement ajustée à 50% de matière sèche; les solutions obtenues constituent des «solutions-mères» de ces additifs, dont on teste l'activité en les incorporant à raison de 0,1% en poids d'additif par rapport au gazole, à deux coupes de gazoles d'origine ARAMCO, désignées par la suite: $G_1$ et $G_2$. Les caractéristiques de ces coupes sont indiquées dans le tableau I ci-après:

Tableau I

| Gazole | Distillation ASTM | | % distillé à 350°C | Masse volumique à 15°C en (kg/l) |
|---|---|---|---|---|
| | Pi°C | Pf°C | | |
| $G_1$ | 181 | 382 | 89 | 0.846 |
| $G_2$ | 186 | 385 | 87 | 0.847 |

Pour chacune des compositions ainsi formées, trois déterminations ont été effectuées:

– le point de trouble suivant la méthode AFNOR T 60-105,

– la température limite de filtrabilité (TF) par la méthode AFNOR M 07-042,

– le point d'écoulement par la méthode AFNOR T 60-105.

Les résultats de ces déterminations sont rassemblés dans le tableau ci-après:

Tableau II

| Additifs | Point de trouble (°C) | | T.L.F. (°C) | | Point d'écoulement (°C) | |
|---|---|---|---|---|---|---|
| | $G_1$ | $G_2$ | $G_1$ | $G_2$ | $G_1$ | $G_2$ |
| sans | +2 | +6 | 0 | +3 | −6 | −3 |
| 0,1% I | −2 | +1 | −11 | −8 | −15 | −12 |
| 0,1% II | −1 | +2 | −8 | −9 | −9 | −9 |
| 0,1% III | −2 | +1 | −9 | −11 | −12 | −12 |
| 0,1% IV | 0 | +3 | −8 | −8 | −9 | −9 |
| 0,1% V | −1 | +2 | -6 | −8 | −12 | −9 |
| 0,1% VI | −1 | +2 | −7 | −7 | −9 | −9 |
| 0,1% VII | −2 | +2 | −10 | −9 | −12 | −12 |
| 0,1% VIII | 0 | +3 | −6 | −8 | −9 | −9 |
| 0,1% IX | −2 | +1 | −11 | −9 | −12 | −12 |
| 0,1% X | −2 | +1 | −11 | −8 | −12 | −9 |
| 0,1% XI | −1 | +2 | −8 | −8 | −9 | −9 |
| 0,1% XII | −2 | +1 | −9 | −9 | −12 | −9 |
| 0,1% XIII | 0 | +3 | −6 | −7 | −9 | −9 |

Exemple 14

Dans cet exemple, on teste l'effet anticorrosion de l'additif I de l'exemple I.

Le produit I a été utilisé dans les deux gazoles $G_1$ et $G_2$ déjà décrits précédemment, à la concentration de 0,01% en poids.

Le test de corrosion consiste à étudier la corrosion par l'eau de mer synthétique, d'éprouvettes cylindriques en acier ou en fer poli, selon la norme ASTM D 665 modifiée de la façon suivante: la température est de 32,2°C et la durée de 20 heures.

Les deux gazoles $G_1$ et $G_2$ non additivés donnent des éprouvettes rouillées à 100% de leur surface et les deux gazoles contenant 0,01% en poids d'additif donnent des éprouvettes intactes à 0% de rouille.

## Revendications

1. Produit, utilisable notamment comme additif pour abaisser le point de trouble de distillats moyens, caractérisé en ce qu'il présente une masse moléculaire moyenne en nombre de 1000 à 10 000 et résulte de la réaction sur un copolymère renfermant de 20 à 40% en moles de motifs (A) provenant d'au moins une oléfine-α linéaire; de 30 à 70% en moles de motifs (B) provenant d'au moins un composé α,β dicarboxylique insaturé sous forme de diacide, de diester d'alkyle léger ou d'anhydride; de 5 à 30% en moles de motifs (C) provenant d'au moins un ester d'alkyle d'acide monocarboxylique insaturé; et de 5 à 15% en moles de motifs (D) provenant du styrène et/ou d'au moins un de ses dérivés alkylés, halogénés ou méthoxylés, d'au moins un composé à fonction amine primaire répondant à une des formules générales:

$$R\text{-}Z\text{-}[(CH_2)_n\text{-}NH]_m\text{-}H \quad (I)$$

$$\text{et } HO\text{-}CH_2\text{-}R''\text{-}NH_2 \quad (II)$$

où R représente un radical aliphatique saturé monovalent de 1 à 30 atomes de carbone, Z est choisi parmi les groupements -NH-, -NR'-, dans lesquels R' représente un radical aliphatique saturé monovalent de 1 à 30 atomes de carbone, et l'atome d'oxygène -O-, n est un nombre entier de 2 à 4, m est zéro lorsque Z est NH ou un nombre entier de 1 à 4 dans tous les cas; et R″ représente un radical aliphatique saturé divalent de 1 à 18 atomes de carbone, ledit composé à fonction amine primaire étant mis en jeu une quantité molaire correspondant à au moins 50% du nombre de motifs (B).

2. Produit selon la revendication 1, caractérisé en ce que l'oléfine-α linéaire dont proviennent les motifs (A) renferme au mons 16 atomes de carbone.

3. Produit selon la revendication 1 ou 2, caractérisé en ce que l'oléfine-α linéaire dont proviennent les motifs (A) renferme de 16 à 30 atomes de carbone; le composé α,β-dicarboxylique insaturé dont proviennent les motifs (B) consiste en au moins un acide maléïque ou alkyl-maléïque, un diester méthylique, éthylique ou propylique d'un tel acide, ou un anhydride maléïque ou alkylmaléïque; l'ester d'alkyle d'acide mono-carboxylique insaturé dont proviennent les motifs (C) consiste en au moins un acrylate ou méthacrylate d'alkyle de 4 à 30 atomes; et le composé dont proviennent les motifs (D) consiste en du styrène.

4. Produit selon l'une des revendications 1 à 3, caractérisé en ce que le composé à fonction amine (I) consiste en au moins une amine primaire linéaire de 12 à 24 atomes de carbone.

5. Produit selon l'une des revendications 1 à 3, caractérisé en ce que le composé à fonction amine (I) consiste en au moins une polyamine de formule:

$$R\text{-}NH\text{-}[(CH_2)_n\text{-}NH]_m\text{-}H$$

où R représente un radical alkyle linéaire de 12 à

24 atomes de carbone, n est un nombre entier de 2 à 4 et m un nombre entier de 1 à 4.

6. Produit selon l'une des revendications 1 à 3, caractérisé en ce que le composé à fonction amine (I) consiste en au moins une polyamine de formule:

$$R\text{-}NR'\text{-}[\text{-}(CH_2)_n\text{-}NH\text{-}]_m\text{-}H$$

où R et R' représentent chacun un radical alkyle linéaire de 8 à 24 atomes de carbone, R et R' renfermant ensemble de 16 à 32 atomes de carbone, n est un nombre entier de 2 à 4 et m un nombre entier de 1 à 4.

7. Produit selon l'une des revendications 1 à 3, caractérisé en ce que le composé à fonction amine (I) consiste en au moins une éther-amine de formule:

$$R\text{-}O\text{-}[\text{-}(CH_2)_n\text{-}NH\text{-}]_m\text{-}H$$

où R représente un radical alkyle de 12 à 24 atomes de carbone, n est un nombre entier de 2 à 4 et m un nombre entier de 1 à 4.

8. Produit selon l'une des revendications 1 à 3, caractérisé en ce que le composé à fonction amine (II) consiste en au moins un amino-alcool de formule:

$$HO\text{-}CH_2\text{-}R''\text{-}NH_2$$

où R″ représente un radical alkylène, linéaire ou ramifié, de 1 à 18 atomes de carbone.

9. Composition de distillat moyen de pétrole, caractérisée en ce qu'elle comprend une proportion majeure de distillat moyen de pétrole ayant un intervalle de distillation entre 150 et 450°C, et une proportion mineure, suffisante pour en abaisser le point de trouble, d'au moins un produit selon l'une des revendications 1 à 8.

10. Composition de distillat moyen de pétrole, caractérisée en ce qu'elle comprend une proportion majeure de distillat moyen de pétrole ayant un intervalle de distillation allant d'une température initiale de 160 à 190°C à une température finale de 350 à 450°C, et une proportion mineure, suffisante pour en abaisser le point de trouble, d'au moins un produit selon l'une des revendications 1 à 8.

11. Composition selon l'une des revendications 9 et 10, caractérisée en ce que la proportion dudit produit est de 0,001 à 1% en poids par rapport audit distillat moyen de pétrole.

12. Composition selon la revendication 11, caractérisée en ce que ladite proportion est de 0,01 à 0,2% en poids.

## Patentansprüche

1. Insbesondere als trübungspunkterniedrigende Zusätze für Mitteldestillate verwendbares Produkt, dadurch gekennzeichnet, dass es ein Zahlendurchschnittsmolekulargewicht von 1000 bis 10 000 aufweist und aus der Umsetzung eines Copolymeren, das 20 bis 40 Mol-% an Einheiten (A), die aus zumindest einem linearen α-Olefin; 30 bis 70 Mol-% an Einheiten (B), die aus zumindest einer ungesättigten α,β-Dicarbonsäure in Form der Disäure, des Niedrigalkyl-Diesters oder des Anhydrids; 5 bis 30 Mol-% an Einheiten (C), die von zumindest einem Alkylester einer ungesättigten Monocarbonsäure und 5 bis 15 Mol-% an Einheiten (D), die von Styrol und/oder zumindest einem seiner Alkyl-, Halogen- oder Methoxylderivate stammen, enthält mit zumindest einer Verbindung mit primärer Aminfunktion stammt, die einer der folgenden allgemeinen Formeln entspricht

$$R\text{-}Z\text{-}[\text{-}(CH_2)_n\text{-}NH\text{-}]_m\text{-}H \qquad (I)$$

und $$HO\text{-}CH_2\text{-}R''\text{-}NH_2 \qquad (II)$$

worin R einen einwertigen gesättigten aliphatischen Rest mit 1 bis 30 Kohlenstoffatomen bedeutet, Z aus den Gruppen -NH-, -NR'-, worin R' einen einwertigen gesättigten aliphatischen Rest mit 1 bis 30 Kohlenstoffatomen bedeutet, und dem Sauerstoffatom -O- gewählt ist, n eine ganze Zahl von 2 bis 4 bedeutet, m Null ist, wenn Z die Gruppe NH bedeutet oder in allen Fällen eine ganze Zahl von 1 bis 4 darstellt; und R″ einen zweiwertigen gesättigten aliphatischen Rest mit 1 bis 18 Kohlenstoffatomen bedeutet, wobei die Verbindung mit primärer Aminfunktion in einer molaren Menge eingesetzt wird, welche zumindest 50% der Anzahl der Einheiten (B) entspricht.

2. Produkt nach Anspruch 1, dadurch gekennzeichnet, dass das lineare α-Olefin, aus welchem die Einheiten (A) stammen, zumindest 16 Kohlenstoffatome aufweist.

3. Produkt nach Anspruch 1 oder 2, dadurch gekennzeichnet, dass das lineare α-Olefin, von dem die Einheiten (A) stammen, 16 bis 30 Kohlenstoffatome aufweist, die ungesättigte α,β-Carbonsäureverbindung, von der die Einheiten (B) stammen, aus zumindest Maleinsäure oder einer Alkylmaleinsäure, einem Methyldiester, Ethyldiester oder Propyldiester einer solchen Säure oder Maleinsäure- oder Alkylmaleinsäureanhydrid besteht der ungesättigte Monocarbonsäurealkylester, von dem die Einheiten (C) stammen, aus zumindest einer der Verbindungen Alkylacrylat oder Alkylmethacrylat mit 4 bis 30 Kohlenstoffatomen besteht, und die Verbindung, von der die Einheiten (D) stammen, aus Styrol besteht.

4. Produkt nach einem der Ansprüche 1 bis 3, dadurch gekennzeichnet, dass die Verbindung mit Aminfunktion (I) aus zumindest einem linearen primären Amin mit 12 bis 24 Kohlenstoffatomen besteht.

5. Produkt nach einem der Ansprüche 1 bis 3, dadurch gekennzeichnet, dass die Verbindung mit Aminfunktion (I) aus zumindest einem Polyamin der folgenden Formel besteht

$$R\text{-}NH\text{-}[\text{-}(CH_2)_n\text{-}NH\text{-}]_m\text{-}H$$

worin R einen linearen Alkylrest mit 12 bis 24 Kohlenstoffatomen, n eine ganze Zahl von 2 bis 4 und m eine ganze Zahl von 1 bis 4 bedeuten.

6. Produkt nach einem der Ansprüche 1 bis 3, dadurch gekennzeichnet, dass die Verbindung, mit Aminfunktion (I) aus zumindest einem Polyamin der folgenden Formel besteht

$$R\text{-}NR'\text{-}[(CH_2)_n\text{-}NH]_m\text{-}H$$

worin R und R' jeweils einen linearen Alkylrest mit 8 bis 24 Kohlenstoffatomen bedeuten, R und R' zusammen 16 bis 32 Kohlenstoffatome aufweisen und n eine ganze Zahl von 2 bis 4 und m eine ganze Zahl von 1 bis 4 bedeuten.

7. Produkt nach einem der Ansprüche 1 bis 3, dadurch gekennzeichnet, dass die Verbindung mit Aminfunktion (I) aus zumindest einem Etheramin der folgenden Formel besteht

$$R\text{-}O\text{-}[(CH_2)_n\text{-}NH]_m\text{-}H$$

worin R einen Alkylrest mit 12 bis 24 Kohlenstoffatomen, n eine ganze Zahl von 2 bis 4 und m eine ganze Zahl von 1 bis 4 bedeuten.

8. Produkt nach einem der Ansprüche 1 bis 3, dadurch gekennzeichnet, dass die Verbindung mit Aminfunktion (II) aus zumindest einem Aminoalkohol der folgenden Formel besteht

$$HO\text{-}CH_2\text{-}R''\text{-}NH_2$$

worin R'' einen linearen oder verzweigten Alkylenrest mit 1 bis 18 Kohlenstoffatomen bedeutet.

9. Zusammensetzung von Erdölmitteldestillat, dadurch gekennzeichnet, dass sie einen grösseren Anteil an Erdölmitteldestillat mit einem Destillationsbereich zwischen 150 und 450°C aufweist und einen kleineren Anteil von zumindest einem Produkt nach einem der Ansprüche 1 bis 8, der ausreicht, um den Trübungspunkt herabzusetzen.

10. Zusammensetzung von Erdölmitteldestillat, dadurch gekennzeichnet, dass sie einen grösseren Anteil an Erdölmitteldestillat mit einem Destillationsbereich mit einer Anfangstemperatur von 160 bis 190°C und einer Endtemperatur von 350 bis 450°C und einen kleineren Anteil an zumindest einem Produkt nach einem der Ansprüche 1 bis 8, der ausreicht, um den Trübungspunkt herabzusetzen, aufweist.

11. Zusammensetzung nach einem der Ansprüche 9 und 10, dadurch gekennzeichnet, dass der Mengenanteil dieses Produktes 0,001 bis 1 Gew.%, bezogen auf das Erdölmitteldestillat, beträgt.

12. Zusammensetzung nach Anspruch 11, dadurch gekennzeichnet, dass der Anteil 0,01 bis 0,2 Gew.% beträgt.

**Claims**

1. A product, useful in particular as an additive for decreasing the cloud point of middle distillates, characterized in that it has an average molecular weight by number from 1,000 to 10,000 and its results from the reaction of a copolymer containing:

from 20 to 40% by mole of recurrent units (A) derived from at least one linear α-olefin; from 30 to 70% by mole of recurrent units (B) derived from at least one unsaturated α, β-dicarboxylic compound in the form of a diacid, a lower alkyl diester or an anhydride; from 5 to 30% by mole of recurrent units (C) derived from at least one alkyl ester of an unsaturated monocarboxylic acid; and from 5 to 15% by mole of recurrent units (D) derived from styrene and/or at least one of its alkylated, halogenated or methoxylated derivatives, with at least one compound having a primary amine function, complying with one of general formulas:

$$R\text{-}Z\text{-}[(CH_2)_n\text{-}NH]_m\text{-}H \quad (I)$$

$$\text{and} \quad HO\text{-}CH_2\text{-}R''\text{-}NH_2 \quad (II)$$

wherein R is a monovalent saturated aliphatic radical having from 1 to 30 carbon atoms, Z is selected from the -NH- and -NR'- groups, wherein R' is a monovalent saturated aliphatic radical having from 1 to 30 carbon atoms, and the oxygen atom -O-, n is an integer from 2 to 4, m is zero when Z is NH or an integer from 1 to 4 in all cases; and R'' represents a divalent saturated aliphatic radical having from 1 to 18 carbon atoms, said compound having a primary amine function being involved in a molar amount corresponding to at least 50% of the number of recurrent units (B).

2. A product according to claim 1, characterized in that the linear α-olefin providing the recurrent units (A) contains at least 16 carbon atoms.

3. A product according to claim 1 or 2, characterized in that the linear α-olefin providing the recurrent units (A) contains from 16 to 30 carbon atoms; the unsaturated α,β-dicarboxylic compound providing the recurrent units (B) consists of at least one maleic or alkylmaleic acid, a methyl, ethyl or propyl diester of such an acid or a maleic or alkylmaleic anhydride; the alkyl ester of unsaturated monocarboxylic acid providing the recurrent units (C) consists of at least one alkyl acrylate or methacrylate having from 4 to 30 carbon atoms in the alkyl group; and the compound providing the recurrent units (D) consists of styrene.

4. A product according to one of claims 1 to 3, characterized in that the compound having an amine function (I) consists of at least one linear primary amine having from 12 to 24 carbon atoms.

5. A product according to one of claims 1 to 3, characterized in that the compound having an amine function (I) consists of at least one polyamine of the formula:

$$R\text{-}NH\text{-}[(CH_2)_n\text{-}NH]_m\text{-}H$$

wherein R is a linear alkyl radical having from 12

to 24 carbon atoms, n is an integer from 2 to 4 and m an integer from 1 to 4.

6. A product according to one of claims 1 to 3, characterized in that the compound having an amine function (I) consists of at least one polyamine of the formula:

$$R\text{-}NR'\text{-}[\text{-}(CH_2)_n\text{-}NH\text{-}]_m\text{-}H$$

wherein R and R′ are each a linear alkyl radical having from 8 to 24 carbon atoms, R and R′ having together from 16 to 32 carbon atoms, n is an integer from 2 to 4 and m an integer from 1 to 4.

7. A product according to one of claims 1 to 3, characterized in that the compound having an amine function (I) consists of at least one etheramine of the formula:

$$R\text{-}O\text{-}[\text{-}(CH_2)_n\text{-}NH\text{-}]_m\text{-}H$$

wherein R″ is an alkyl radical having from 12 to 24 carbon atoms, n is an integer form 2 to 4 and m an integer form 1 to 4.

8. A product according to one of claims 1 to 3, characterized in that the compound having an amine function (II) consists of at least one aminoalcohol of the formula

$$HO\text{-}CH_2\text{-}R''\text{-}NH_2$$

wherein R″ is a linear or branches alkylene radical having from 1 to 18 carbon atoms.

9. A petroleum middle distillate composition, characterized in that it comprises a major proportion of a petroleum middle distillate having a distillation range from 150 to 450°C and a minor proportion, sufficient to decrease the cloud point thereof, of at least one product according to one of claims 1 to 8.

10. A petroleum middle distillate composition, characterized in that it comprises a major proportion of petroleum middle distillate having a distillation range extending from an initial temperature of from 160 to 190°C to a final temperature of from 350 to 450°C, and a minor proportion, sufficient to decrease the cloud point thereof, of at least one product according to one of claims 1 to 8.

11. A composition according to one of claims 9 and 10, characterized in that the proportion of said product is from 0.001 to 1% by weight with respect to said petroleum middle distillate.

12. A composition according to claim 11, characterized in that said proportion is from 0.01 to 0.2% by weight.